(19) Europäisches Patentamt / European Patent Office / Office européen des brevets

(11) **EP 4 105 836 A1**

(12) **EUROPEAN PATENT APPLICATION**

(43) Date of publication:
**21.12.2022 Bulletin 2022/51**

(51) International Patent Classification (IPC):
**G06N 3/04** *(2006.01)* **G06N 7/00** *(2006.01)*
**G06N 10/60** *(2022.01)*

(21) Application number: **22177793.1**

(22) Date of filing: **08.06.2022**

(52) Cooperative Patent Classification (CPC):
**G06N 3/0445;** G06N 7/005; G06N 10/60

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.06.2021 US 202117352134**

(71) Applicant: **FUJITSU LIMITED**
**Kawasaki-shi, Kanagawa 211-8588 (JP)**

(72) Inventors:
• **Bagherbeik, Mohammad**
  **Sunnyvale, California, 94085 (US)**
• **Sheikholeslami, Ali**
  **Sunnyvale, California, 94085 (US)**
• **Tamura, Hirotaka**
  **Sunnyvale, California, 94085 (US)**
• **Kanda, Kouichi**
  **Sunnyvale, California, 94085 (US)**

(74) Representative: **Hoffmann Eitle**
**Patent- und Rechtsanwälte PartmbB**
**Arabellastraße 30**
**81925 München (DE)**

(54) **REPLICA PROCESSING UNIT FOR BOLTZMANN MACHINE**

(57) According to an aspect of an embodiment, operations may include performing, based on weights and local field values associated with an optimization problem, a stochastic process with respect to changing a respective state of one or more variables that each represent a characteristic related to the optimization problem. The stochastic process may include performing trials with respect to one or more of the variables, in which a respective trial determines whether to change a respective state of a respective variable. The operations additionally may include determining an acceptance rate of state changes of the variables during the stochastic process and adjusting a degree of parallelism with respect to performing the trials based on the determined acceptance rate.

**Description**

FIELD

The embodiments discussed herein are related to replica processing units that may be used with Boltzmann Machines.

BACKGROUND

Combinatorial optimization problems are often categorized as NP-Problems (Nondeterministic Polynomial time Problems) such as NP-hard or NP-complete problems, in which there often are no known algorithms to solve such problems in polynomial time. Such combinatorial optimization problems may appear in numerous applications such as minimization of the number of vias in layout design, maximization of the return from a stock portfolio, airline routing and scheduling, and wireless sensor networks.

The subject matter claimed herein is not limited to embodiments that solve any disadvantages or that operate only in environments such as those described above. Rather, this background is only provided to illustrate one example technology area where some embodiments described herein may be practiced.

SUMMARY

According to an aspect of an embodiment, operations may include obtaining a state matrix of a system that represents an optimization problem, the state matrix including variables that each represent a characteristic related to the optimization problem. The operations may also include obtaining weights that correspond to the variables, each respective weight relating to one or more relationships between a respective variable and one or more other variables of the state matrix. In addition, the operations may include obtaining a local field matrix that includes local field values, the local field values indicating interactions between the variables as influenced by the respective weights of the respective variables. Further, the operations may include performing, based on the weights and the local field values, a stochastic process with respect to changing a respective state of one or more of the variables. The stochastic process may include performing trials with respect to one or more of the variables, in which a respective trial determines whether to change a respective state of a respective variable. The operations additionally may include determining an acceptance rate of state changes of the variables during the stochastic process and adjusting a degree of parallelism with respect to performing the trials based on the determined acceptance rate.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram representing an example environment configured to solve an optimization problem;
FIG. 2A illustrates an example replica exchange unit (RPU) configured to perform operations related to solving an optimization problem;
FIG. 2B illustrates an example merged RPU;
FIG. 2C illustrates another example merged RPU;
FIG. 2D illustrates another example merged RPU;
FIG. 2E illustrates an example system that may be configured to perform a replica exchange process using multiple RPU's;
FIG. 3 illustrates a block diagram of an example computing system configured to perform a replica exchange process; and
FIG. 4 illustrates a flowchart of an example method of performing trials during the solving of an optimization problem.

DESCRIPTION OF EMBODIMENTS

Combinatorial optimization problems may include a class of optimization problems that may be used to determine a maximum or a minimum value of an energy or cost function of a system. For example, combinatorial optimization may be used to minimize a number of vias of a circuit layout design, maximize stock returns, improve airline routing and scheduling, configure of wireless sensor networks, among other applications.

In some embodiments, a system may be used to represent or solve an optimization problem. For example, the system may include a neural network that represents the optimization problem. In these or other embodiments, the neural network that may include any suitable number of nodes (also referred to as "neurons"). In these or other embodiments, the neurons may each correspond to a characteristic of the optimization problem. Additionally or alternatively, the states of each of the neurons of the neural network may be used to represent the state of the different characteristics of the optimization problem. Therefore, the collective states of the neurons may be used to represent an overall state of the optimization problem. In these or other embodiments, the neural network may be configured to represent and/or solve one or more different types of optimization problems in any suitable manner. In some embodiments, the neural network may be configured as a Boltzmann machine.

Further, the overall state space of the system (e.g., of the Boltzmann machine) may be represented as an Ising energy ("energy"). In these or other embodiments, a solution to the optimization problem may be determined using a minimization technique or a maximization technique. The minimization technique may be used to determine a minimum energy of the system and the maximization technique may be used to determine a maximum energy of the system. For example, a state of the system that corresponds to the determined minimum or maximum energy may be used as a solution to the particular optimization problem. In these or other embodiments, a stochastic process may be used to randomly select neurons and to change the states of the neurons to determine the maximum or minimum energy.

Reference to determining a minimum energy or maximum energy in the present disclosure is not limited to determining the absolute minimum energy or the absolute maximum energy of a system. Instead, reference to determining a minimum energy or a maximum energy may include performing minimization or maximization operations with respect to energy of a system in which an output from such operations is used as a solution to the corresponding optimization problem.

Additionally or alternatively, a Markov Chain Monte Carlo (MCMC) process may be performed with respect to the system as part of solving the corresponding optimization problem. For example, replica exchange may be performed to find a minimum or maximum of the energy of the system. Replica exchange may include running M copies of the system simultaneously but with different scaling factors that influence whether a change to the system occurs during the running of the copies of the system.

As detailed below, according to one or more embodiments of the present disclosure, a system may include one or more replica processing units ("RPU") that may each be configured to run one or more replicas of a system (e.g., a Boltzmann machine). The RPUs may be configured such that they may run different types of Boltzmann machines. For example, as discussed and explained in more detail below, the RPUs may be configured such that they may handle different operation modes. For example, the RPUs may be configured to be able to run a regular Boltzmann machine and/or a clustered Boltzmann machine such as a row clustered Boltzmann machine, a column clustered Boltzmann machine, or a cross clustered Boltzmann machine.

In these or other embodiments, the multiple RPUs may be implemented together to each run one or more different replicas of the system such that the RPUs may be configured to perform a replica exchange process. Additionally or alternatively, two or more of the different RPUs participating in the replica exchange process may run at a different operation mode, which may improve the versatility used to solve optimization problems.

Additionally or alternatively, the RPUs may be configured to operate at different levels of parallelism during the solving of optimization problems. In these or other embodiments, the amount of parallelism may be adjusted based on an acceptance rate of state changes of variables of the system during the solving. Additionally or alternatively, an offset that may affect the acceptance rate may be adjusted during the solving.

The adjustment of the parallelism and/or the offset may help improve the speed and/or efficiency of the RPUs. For example, increasing the offset and/or the parallelism may increase the speed at which an RPU or a computing system that includes one or more RPUs is able to solve a problem. Further adjusting the parallelism may improve the ability of the RPU and/or associated computing system to solve a problem by pulling the solving out of a local minimum or local maximum. Further, decreasing the parallelism when it may be less beneficial may reduce the amount of computational resources that may be used by the RPUs, which may improve the efficiency of the RPUs and/or associated computing system while solving the problems.

Embodiments of the present disclosure are explained with reference to the accompanying drawings.

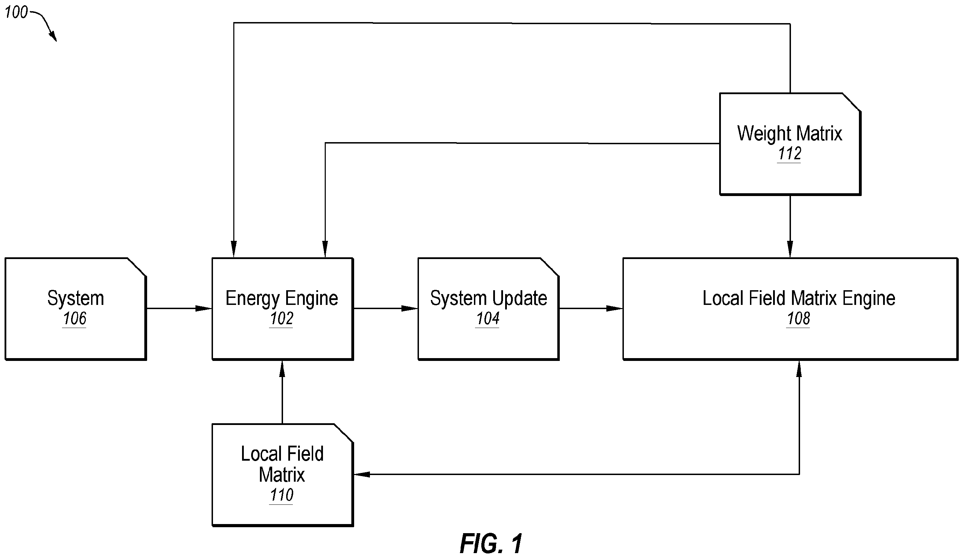

FIG. 1 is a diagram representing an example environment 100 configured to solve optimization problems, arranged in accordance with at least one embodiment described in the present disclosure. The environment 100 may include an energy determination engine 102 ("energy engine 102") configured to update and output a system update 104 of a system 106. In these or other embodiments, the environment 100 may include a local field matrix engine 108 ("LFM engine 108") configured to update a local field matrix 110 ("LFM 110") based on the system update 104. As discussed in further detail below, in some embodiments, one or more replica processing units may be configured to implement the environment 100.

The system 106 may include any suitable representation of an optimization problem that may be solved. For example, in some embodiments the system 106 may include a state matrix $X$ that may include a set of variables that may each represent a characteristic related to the optimization problem. The state matrix $X$ may accordingly represent different states of the system 106. For example, a first state matrix $X1$ with variables each having first values may represent a first state of the system 106 and a second state matrix $X2$ with the variables having second values may represent a second state of the system 106. In these or other embodiments, the difference between the state matrix $X1$ and $X2$ may be anywhere from only one corresponding variable in both $X1$ and $X2$ having a different value to every variable in $X1$ and $X2$ having different values. In some embodiments, the state matrix $X$ may be represented by a state vector $X_v$.

In these or other embodiments, the environment 100 may include a weight matrix 112. The weight matrix 112 may indicate connection weights that may correspond to the variables of the system 106. In some embodiments, each respective connection weight may relate to one or more relationships between a respective variable and one or more other variables of system 106.

In these or other embodiments, the environment 100 may include a local field matrix 110 ("LFM 110"). The LFM 110 may be used to indicate an amount of change in the energy of the particular system when the state of a variable of the particular system is changed (e.g., when the state of a variable included in the state vector $X$ changes). The LFM 110 may include values that are based on interactions between the variables of the particular system as influenced by their respective weights with respect to the changing of the states of one or more of the variables.

In some embodiments, the system 106 may be a neural network that may include any suitable number of nodes (also referred to as "neurons"). In these or other embodiments, the state matrix $X$ of the system 106 may represent the states of each of the neurons of the neural network. For example, each neuron may be a bit that may have a value of "0" or "1" and the state matrix $X$ may include a "1" value or a "0" value for each neuron of the neural network. In these or other embodiments, the neural network may be configured to solve one or more different types of optimization problems in any suitable manner.

In some embodiments, the neural network of the system 106 may be configured as a Boltzmann machine. In these or other embodiments, the Boltzmann machine may be configured as a clustered Boltzmann machine (CBM) in which the neurons of the Boltzmann machine may be grouped into clusters. The clusters may be formed such that there may be no connections between neurons within the same cluster (e.g., connection weights between neurons of a cluster may be "0"). In these or other embodiments, the CBM may be configured to have an at-most-n constraint in which only "n" number of neurons in any given cluster may be active (e.g., have a bit value of "1"). For example, the CBM may have an exactly-1 (also referred to as "1-hot encoding") constraint such that at all times, exactly one of the neurons in a cluster is active (e.g. have a bit value of "1") and the rest of the neurons in the cluster **must** be inactive (e.g. have a bit value of "0"). Example clustering that may be used is row clustering and/or column clustering with respect to the rows and columns of the state matrix $X$. In these or other embodiments, clusters may be combined to form a cross cluster. For example, a row cluster may be combined with a column cluster to form a cross cluster. Such a cross cluster configuration with an exactly-1 constraint may constrain the state matrix $X$ such that only one neuron may be active in each row and each column of the state matrix $X$.

In some embodiments, the state matrix $X$ may be reduced in size using clustering. For example, for a given cluster (e.g., a specific row) with an exactly-1 constraint, only one neuron may be active, as such rather than storing values indicating the state of every neuron of the cluster, a single index value that indicates which neuron in the cluster is active may be stored instead. In such instances the state matrix $X$ may be represented by a state vector $X$.

Additionally or alternatively, the system 106 may include an Ising Model that is mapped to the optimization problem to represent an Ising energy of the optimization problem that corresponds to the system 106. For example, the Ising energy of a system with variables having binary states may be represented by the following expression (1):

$$E(x) = -\sum_{i=1}^{N} \quad \sum_{j=i+1}^{N} w_{i,j} x_i x_j - \sum_{i=1}^{N} b_i x_i \qquad (1)$$

In the above expression (1), $x_i$ is the $i_{th}$ variable of the state vector $X$ that represents a corresponding state matrix $X$ and can be either 0 or 1; $x_j$ is the $j_{th}$ variable of the state vector $X$ and can be either 0 or 1; $w_{ij}$ is a connection weight between the $i_{th}$ and $j_{th}$ variables of $X$; and $b_i$ is a bias associated with the $i_{th}$ element.

The energy engine 102 may include code and routines configured to enable a computing system to perform one or more of the operations described therewith. Additionally or alternatively, the energy engine 102 may be implemented using hardware including any number of processors, microprocessors (e.g., to perform or control performance of one or more operations), field-programmable gate arrays (FPGAs), application-specific integrated circuits (ASICs) or any suitable combination of two or more thereof.

Alternatively or additionally, the energy engine 102 may be implemented using a combination of hardware and software. In the present disclosure, operations described as being performed by the energy engine 102 may include operations that the energy engine 102 may direct a corresponding system to perform.

In some embodiments, the energy engine 102 may be configured to randomly generate (e.g., via a stochastic process) a proposed change to one or more variables of the state matrix $X$. For example, in some embodiments, in a CBM with an exactly-1 constraint, a proposed change may include changing an inactive neuron (e.g., as represented by a state variable of the state matrix $X$) to being active and consequently changing the active neuron to being inactive. Therefore, two changes (e.g., bit flips) may occur with respect to any given cluster. Additionally or alternatively, in a cross cluster configuration of with an exactly-1 constraint, such as a combined row cluster and combined column cluster configuration, a proposed change may include a four bit flips because changing the states of neurons in a particular row also affects the columns to which the changed neurons belong.

In some embodiments, the determination as to whether to accept a particular change for a particular cluster may be based on any suitable probability function. In these or other embodiments, the probability function may be based on a change in the system energy that may be caused by the particular change. In some embodiments, the change in the system energy may be determined using the LFM 110.

As indicated above, the LFM 110 may indicate interactions between the variables of the system 106 as influenced by their respective weights with respect to changing of states of the variables. For example, the values for the variables of the system 106 of the LFM 110 may be expressed as follows in expression (2):

$$h_i(x) = -\sum_{\forall j, j \neq i} w_{i,j} x_j - b_i \qquad (2)$$

In expression (2) $h_i(x)$ is the local field value of the $i_{th}$ variable of a local field matrix $H$, in which the $i_{th}$ variable of the local field matrix $H$ corresponds to the $i_{th}$ variable of a corresponding state matrix $X$; $x_j$ is the $j_{th}$ variable of the state vector $X$ and can be either 0 or 1; $w_{ij}$ is the connection weight between the $i_{th}$ and $j_{th}$ variables of $X$; and $b_i$ is the bias associated with the $i_{th}$.

As indicated above, in some embodiments, the change in the system energy with respect to a proposed change may be based on the LFM 110. For example, a change in the system energy for a non-cross clustered CBM (e.g., for a row cluster of a CBM) may be determined as follows in expression (3):

$$\Delta E_{RC}(X_{RC}, k) = h_{k,j} - h_{k,i} \qquad (3)$$

In expression (3), $k$ represents a given row of the state matrix $X$ as indexed by a corresponding state vector $X_{RC}$ and $h_{k,j}$ and $h_{k,i}$ correspond to the neurons involved in the proposed change. In expression (3) $h_{k,j}$ is the local field matrix value that corresponds to the neuron $x_{k,j}$ that is inactive and $h_{k,i}$ is the local field matrix value that corresponds to the neuron $x_{k,i}$ that is active prior to the proposed swap that would activate $x_{k,j}$ and deactivate $x_{k,i}$.

As another example, a change in the system energy for a cross clustered CBM (e.g., for a row/column cross clustered CBM) may be determined as follows in expression (4):

$$\Delta E_{XC}(X_{XC}, k, k') = -\left(h_{k,l} + h_{k',l'}\right) + \left(h_{k,l'} + h_{k',l}\right) - \left(w_{k,l:k',l'} + w_{k,l':k',l}\right) \qquad (4)$$

In expression (4), $k$ and $k'$ represents rows of the state matrix $X$ as indexed by a corresponding state vector $X_{XC}$; $l$ and $l'$ represent the indices of the active neurons in rows $k$ and $k'$, respectively, in the state vector $X_{XC}$; $h_{k,l}$, $h_{k',l'}$, $h_{k,l'}$ and $h_{k',l}$ correspond to the neurons involved in the proposed change similar to described above; and $w_{k,l:k',l'}$ and $w_{k,l':k',l}$ correspond to the weights that may correspond to the neurons at issue with respect to the proposed change.

In some embodiments, the weight matrix 112 may include the values of the weights, or a subset of the values of the weights such that the energy engine 102 may obtain the weights by pulling the corresponding values from the weight matrix 112. Additionally or alternatively, the weight matrix 112 may include a first matrix and a second matrix that may be used by the energy engine 102 to determine the values of the weights, such as described in U.S. Patent Application No. 16/849,887, filed on April 15, 2020 and incorporated in the present disclosure by reference in its entirety.

As indicated above, the probability as to whether to accept a proposed change for one or more variables may be accepted may be based on the change in the system energy that may occur in response to the proposed change. For example, the acceptance probability for a proposed change in the system for a non-cross clustered CBM (e.g., for a row cluster of a CBM) in which the change in energy is determined based on expression (3) above may be determined as follows in expression (5):

$$P(X_{RC}, k) = e^{\frac{-\Delta E_{RC}(X_{RC}, k)}{t}} \quad (5)$$

In expression (5), $\Delta E_{RC}(X_{RC}, k)$ may be the energy change determined from expression (3) and t may be a scaling factor that may be used to influence whether or not to make a change. For example, t may be the "temperature" that is used as a scaling factor when performing a simulated or digital annealing process such as replica exchange (also referred to as "parallel tempering").

As another example, the acceptance probability for a proposed change in the system for a cross clustered CBM (e.g., for a row/column cross cluster of a CBM) in which the change in energy is determined based on expression (4) above may be determined as follows in expression (6):

$$P(X_{XC}, k, k') = e^{\frac{-\Delta E_{RC}(X_{XC}, k, k')}{t}} \quad (6)$$

In expression (6), $\Delta E_{RC}(X_{XC}, k, k')$ may be the energy change determined from expression (4) and t may be the scaling factor such as that described above with respect to expression (5).

The energy engine 102 may output a system update 104. The system update 104 may include the updates to the system 106 that may occur in response to accepting one or more proposed changes.

In some embodiments, the energy engine 102 may be included in or part of an annealing system (e.g., a digital annealing system or a quantum annealing system). In these or other embodiments, the energy engine 102 may be configured to perform a replica exchange Markov Chain Monte Carlo (MCMC) process with respect to the system 106. For example, the energy engine 102 may be configured to perform replica exchange to find a state vector *Xmin* that may minimize the energy of the system 106. As another example, the energy engine 102 may be configured to perform replica exchange to find a state vector *Xmax* that may maximize the energy of the system 106. As indicated above, replica exchange may include running M copies of the system 106 simultaneously but with different scaling factors that influence whether a change to the system occurs during the running of the copies of the system 106. Therefore, in some embodiments, the energy engine 102 may perform the update operations described above with respect to multiple replicas of the system 106 at different temperature levels.

The LFM engine 108 may be configured to update the LFM 110 based on the updates of the system 106 that may be reflected in the system update 104. Additionally or alternatively, the LFM engine 108 may be configured to initially generate the LFM 110 based on the system 106 upon initialization of solving of the corresponding optimization problem.

Modifications, additions, or omissions, may be made to FIG. 1, without departing from the scope of the present disclosure. For example, the particular configuration of the system 106 may vary according to different implementations. Further, the operations described as being performed by the energy engine 102 and/or the LFM engine 108 may be performed by any applicable implementation that may not be exactly the same as that described herein. Additionally, the environment 100 may include more or fewer elements than those illustrated and described in the present disclosure. Further, the specific configuration, association, or inclusion of the elements in particular devices or systems may vary depending on specific implementations. For example, as discussed in further detail below, the system 100 and/or the operations described therein may be implemented using one or more RPUs, which are discussed in further detail below.

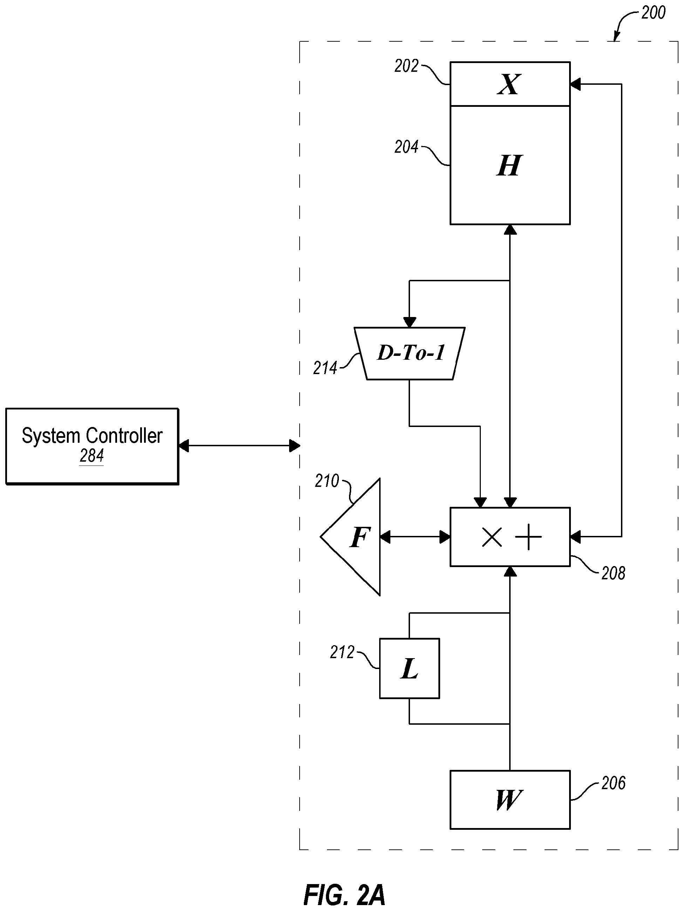

FIG. 2A is a diagram representing an example replica processing unit 200 ("RPU 200") configured to perform operations related to solving optimization problems, arranged in accordance with at least one embodiment described in the present disclosure. The RPU 200 may include a state block 202, a local field block 204, a weight block 206, an arithmetic element 208, and a decision element 210.

The state block 202 may include any suitable computer-readable storage media that may have stored thereon a state matrix $X$ that may represent a particular optimization problem. The state matrix $X$ may be analogous the state matrix $X$ discussed above with respect to FIG. 1. Further, in some embodiments, the state block 202 may be sized to be able to store a square matrix with $D$ rows and $D$ columns. As such, in some embodiments, the state block 202 may store a single state matrix $X$ that is sized as a $D \times D$ matrix. Additionally or alternatively, in instances in which the state matrix $X$ has fewer values than a $D \times D$ matrix, the state matrix $X$ may be stored in rows of size $D$ or columns of size $D$. In these or other embodiments, depending on the nature of the optimization problem and the subsequent size of the corresponding state matrix $X$, in some embodiments, the state block 202 may store more than one state matrix $X$.

The local field block 204 may include any suitable computer-readable storage media that may have stored thereon a local field matrix $H$ of the particular optimization problem. The local field matrix $H$ may be analogous the local field matrix 110 discussed above with respect to FIG. 1. Further, in some embodiments, the local field block 204 may be sized to be able to store a square matrix with $D$ rows and $D$ columns. As such, in some embodiments, the local field block 204 may store a single local field matrix $H$ that is sized as $a D \times D$ matrix. Additionally or alternatively, in instances in which the local field matrix $H$ has fewer values than a $D$ x $D$ matrix, the local field matrix $H$ may be stored in rows of size $D$ or columns of size $D$. In these or other embodiments, depending on the nature of the optimization problem and the subsequent size of the corresponding local field matrix $H$, in some embodiments, the local field block may store more than one local field matrix $H$.

The weight block 206 may include any suitable computer-readable storage media that may have stored thereon a weight matrix $W$ of the particular optimization problem. The weight matrix $W$ may be analogous to the weight matrix 112 discussed above with respect to FIG. 1. In some embodiments, the weight matrix $W$ that is stored on the weight block 206 may be an entire $N$ x $N$ weight matrix. Additionally or alternatively, the weight matrix $W$ that is stored on the weight block 206 may be a subset of the full weight matrix that corresponds to the particular optimization problem. In these or other embodiments, the weight block 206 may operate as a cache to store the subset of the full weight matrix. Additionally or alternatively, in instances in which the weight block 206 operates as a cache, the full weight matrix $W$ may be stored on a computer-readable storage medium that is external to the chip on which the RPU 200 may be built. Additionally or alternatively, in some embodiments (e.g., instances in which the RPU implements a cross clustered Boltzmann machine), the weight block 206 may include a first matrix and a second matrix that may be used to determine the values of the weights, such as described in U.S. Patent Application No. 16/849,887.

The arithmetic element 208 may include any suitable hardware and/or software configured to perform arithmetic operations that may be used in solving the optimization problem For example, the arithmetic element 208 may include one or more adders configured to perform addition and subtraction and/or one or more multipliers configured to perform multiplication and division. Additionally or alternatively, the adders and the multipliers may be configured to perform fused multiply-additions in some embodiments. In these or other embodiments, the adders and/or multipliers of the arithmetic element 208 may be configured such that the arithmetic element 208 may be able to perform up to $D$ arithmetic operations in parallel. As such, the arithmetic element 208 may be configured to perform, in parallel, arithmetic operations related to potentially changing the state of each respective state variable included in a row or column of the state matrix $X$, as discussed in further detail below. For example, as discussed in further detail below, the arithmetic element 208 may be configured to perform arithmetic operations related to determining a respective energy change that may be caused by changing the state of a respective variable of the state matrix $X$ in which the determined energy change may be used to determine whether to change the state of the respective variable.

The decision element 210 (denoted with an "$F$" in FIG. 2A) may include any suitable hardware and/or software configured to perform operations related to determining whether to accept or reject proposed state changes for respective variables of the state matrix $X$. For example, the decision element 210 may include one or more comparators each configured to perform a Bernoulli Trial with respect to a respective value received from the arithmetic element 208. The Bernoulli Trial may determine whether to accept or reject a state change of a respective state variable based on the received value (e.g., based on the corresponding determined change in energy). In some embodiments, the decision element 210 may include $D$ comparators arranged in parallel such that the decision element 210 may be configured to make $D$ determinations in parallel.

In these or other embodiments, the decision element 210 may include a $D$-to-1 tournament reduction tree that may be configured to randomly select one of the accepted state changes from up to $DIM$ candidates of accepted state changes. In these or other embodiments, the selected accepted state change of the corresponding state variable may be used to update the values of the state matrix $X$, the local field matrix $H$, and the weight matrix $W$ that correspond to the corresponding state variable with the accepted state change.

In some embodiments, the RPU 200 may be communicatively coupled to a system controller 284 ("controller 284"). The controller 284 may include code and routines configured to enable a computing system to perform one or more of the operations described therewith. Additionally or alternatively, the controller 284 may be implemented using hardware including any number of processors, microprocessors (e.g., to perform or control performance of one or more operations), field-programmable gate arrays (FPGAs), application-specific integrated circuits (ASICs) or any suitable combination of two or more thereof. Alternatively or additionally, the controller 284 may be implemented using a combination of hardware and software. In the present disclosure, operations described as being performed by the controller 284 may include operations that the controller 284 may direct a corresponding system to perform.

The controller 284 may be configured to direct the perform one or more control operations with respect to the RPU 200. For example, the controller 284 may be configured to direct the loading of data into the different blocks of the RPU 200 from one or more applicable external sources. For example, the controller 284 may be configured to update the weight matrix $W$ with values stored in external memory in instances in which the weight block 206 is used as a cache. Additionally or alternatively, the controller 284 may be configured to load the state matrix $X$ and/or the local field matrix $H$ into the state block 202 and the local field block 204, respectively, as part of an initialization of the RPU 200 for a particular optimization problem. In these or other embodiments, the controller 284 may be configured to direct as to the type of system the RPU 200 may implement. For example, the controller 284 may direct the operations of the RPU 200 to run a regular Boltzmann Machine, a row clustered Boltzmann Machine, and/or a cross-clustered Boltzmann Machine.

As indicated above, the arithmetic element 208 and the decision element 210 may be configured to perform a stochastic process with respect to changing a respective state of one or more of the variables of the state matrix $X$. The stochastic process may include performing a respective trial with respect to each of one or more of the variables to determine whether to change a respective state of a respective variable. In some embodiments, the stochastic process may be directed by the controller 284.

For example, in some embodiments, the arithmetic element 208 may be configured to obtain values that correspond to each other from the local field matrix $H$, the weight matrix $W$, and the state matrix $X$. For example, the arithmetic element 208 may be configured to obtain a particular value of a particular state variable of the state matrix, a particular weight value from the weight matrix $W$ that corresponds to the particular state variable, and a particular local field value from the local field matrix $H$ that corresponds to the particular state variable. In these or other embodiments, the arithmetic element 208 may be configured to obtain $D$ values from the local field matrix $H$, the weight matrix $W$, and the state matrix $X$, respectively. For example, in some embodiments, the RPU 200 may include one or more selectors configured to select a respective row of the local field matrix H, the weight matrix $W$, and the state matrix $X$ and provide the selected row to the arithmetic element 208. In some embodiments, the one or more selectors may include one or more a $D$-to-1 multiplexers. Based on the obtained values, the arithmetic element 208 may be configured to perform arithmetic operations related to determining a change in energy that may correspond to changing the state of a corresponding state variable.

For example, the arithmetic element 208 may be configured to determine, based on the current local field value ($"h_{old}"$) of a respective state variable and the weight value ($"w"$) of the respective state variable, a new local field value ($"h_{new}"$) for the respective state variable if the state of the respective state variable were to be changed. For instance, in an instance in which the received value of the respective state variable indicates that the respective state variable is flipped "ON" (e.g., the received value is "1"), the arithmetic element 208 may execute the following expression (7) with respect to the corresponding local field and weight values:

$$h_{new} = h_{old} + w \ (7)$$

As another example, in an instance in which the received value of the respective state variable indicates that the respective state variable is flipped "OFF" (e.g., the received value is "0"), the arithmetic element 208 may execute the following expression (8) with respect to the corresponding local field and weight values:

$$h_{new} = h_{old} - w \ (8)$$

In these or other embodiments, the arithmetic element 208 may be configured to use the determined new local field value to obtain the change in the energy of the system that may occur by flipping the bit. In these or other embodiments, the arithmetic element 208 may be configured to perform any suitable arithmetic operation of any suitable expression that may be used to determine the change in energy.

For example, for a regular Boltzmann machine, the arithmetic element 208 may be configured to execute the following expression (9) using $h_{new}$ for the corresponding local field $"h_i"$ and using the state value $"x_i"$ to determine the corresponding change in the energy of the system:

$$\Delta E(x_i) = (1 - 2x_i)h_i \qquad (9)$$

As another example, as indicated above, in an exactly-1 row clustered Boltzmann machine, only one state variable of the row is ON and one state variable of the row must be ON at a time. Therefore, a proposed change in the state of one state variable of a row also affects one other state variable of the row. As such, for a row clustered Boltzmann machine, the arithmetic element 208 may be configured to determine a respective $h_{new}$ for the two respective state variables that may be changed and may also execute expression (3) discussed above to determine the corresponding change in the energy of the system, in which the respective $h_{new}$'s are used in expression (3).

As another example, as indicated above, in an exactly-1 cross clustered Boltzmann machine, only one state variable of the cross cluster is ON and one state variable of the cross cluster must be ON at a time. Therefore, a proposed change in the state of one state variable of the cluster also affects one other state variable of the cluster. As such, for cross row clustered Boltzmann machine, the arithmetic element 208 may be configured to determine a respective $h_{new}$ for the two respective state variables that may be changed and may also execute expression (4) discussed above to determine the corresponding change in the energy of the system, in which the respective $h_{new}$'s and corresponding weights are used in expression (4). Note that for a cross clustered Boltzmann machine, the values of w that may be used in expression (4) may be determined from the first and second matrices described above with respect to the weight block 206, such as described in detail with respect to U.S. Patent Application No. 16/849,887. In these or other embodiments, the RPU 200 may include a logic block 212 (denoted with an *"L"* in FIG. 2A) that includes one or more additional elements such as those described in U.S. Patent Application No. 16/849,887 to determine the values of w.

As part of the respective trials related to the respective state variables, the decision element 210 may be configured to determine whether to accept or reject the proposed state changes for each respective state variable, such as in the manner described above. Additionally or alternatively, multiple trials may be performed in parallel by the arithmetic element 208 and the decision element 210. In these or other embodiments, the decision element 210 may be configured to randomly choose an accepted state change from the other accepted state changes as the state change that is actually implemented. For example, the decision element 210 may use the tournament reduction tree to select one of the accepted state changes.

The RPU 200 may be configured to update the values of the state matrix $X$, the local field matrix $H$, and the weight matrix $W$ based on the accepted state changes that are selected for implementation. For example, the value of $h_{new}$ that corresponds to the implemented state change may be added to the corresponding entry in the local field matrix H. Further, the state of the variable corresponding to the implemented change may be changed. In addition, the weight value of the weight that corresponds to the changing variable may be updated. For example, for a variable that is changing from being "OFF" to "ON", the corresponding weight value may be changed by having the value of $k_{new}$ added thereto. As another example, for a variable that is changing from being "ON" to "OFF", the corresponding weight value may be changed by having the value of $h_{new}$ subtracted therefrom. In some embodiments, the arithmetic element 208 may be configured to perform the arithmetic update operations. Additionally or alternatively, one or more of the other update operations may be performed by the decision element 210 and/or the arithmetic element 208.

As indicated above, the RPU 200 may be configured to perform parallel trials with respect to the different variables of the state matrix $X$. In addition, the degree of parallelism may vary or be adjusted. For example, as indicated above, the arithmetic element 208 and the decision element 210 may be configured to perform up to $D$ trials at a time. In instances in which the total number of elements of the state matrix $X$ is less than or equal to $D$, the RPU 200 may be able to perform a trial for each state variable at the same time. In these or other embodiments, the RPU 200 may randomly select (e.g., using the decision element 210) from the accepted state changes determined during the parallel performed trials, one or more of the accepted state changes as an implemented state change. Such an operation may be referred to as a fully parallel mode and performing fully parallel trials.

In these or other embodiments, such as in instances in which the total number of elements of the state matrix $X$ is greater than $D$, the RPU 200 may operate in a sequential parallel mode in which sequential parallel trials may be performed. During the sequential parallel mode, respective sets of $D$ trials may be performed. Further, $D$ trials may be performed in parallel for each respective set. In addition, one of the accepted changes determined during the respective set of trials may be selected as a "winner" of the respective set, such as described above (e.g., using a tournament reduction tree). In some embodiments, the respective winner of the respective set may be stored by the RPU 200 (e.g., in a register of the RPU).

In these or other embodiments, one or more additional sets may be performed sequentially and the respective winner for each respective additional set may also be stored. Additionally or alternatively, after a certain number of sets have been performed, one of the winners of one of the sets may be selected from the other winners as the change that is to be implemented. For example, the winners of the sets may be provided to the tournament reduction tree, which may then randomly select one of the winners as the change to implement.

Additionally or alternatively, the RPU 200 may be configured to operate in a sequential fully parallel mode. In the sequential fully parallel mode, the number of sets of trials that may be performed may be such that a trial is performed with respect to every variable of the state matrix $X$ before selecting a final winner.

In some embodiments, such as indicated above, the state matrix $X$ and the local field matrix $H$ may be configured and sized such that each row of the state matrix $X$ and the local field matrix $H$ includes $D$ elements. As such, in some embodiments, the RPU 200 may be configured to perform sequential parallel trials on a row-by-row basis in which each set of trials corresponds to a respective row of the state matrix $X$.

The operation of the RPU 200 in a sequential parallel mode may vary somewhat depending on whether the RPU 200 is running a regular Boltzmann Machine or a clustered Boltzmann machine, such as a row clustered Boltzmann Machine. For example, in some embodiments, the RPU 200 may include a $D$-to-1 multiplexer 214. During sequential parallel mode while running a regular Boltzmann machine, the $D$-to-1 multiplexer 214 may not be used. However, during sequential parallel mode while running a row clustered Boltzmann machine, the $D$-to-1 multiplexer 214 may be configured to select the local field value that corresponds to the "ON" variable of the respective row currently being processed. This local field value may accordingly be sent to the arithmetic element 208 and used to determine the change in energy for each respective trial of the other respective state variables of the respective row, such as described above. In these or other embodiments, given that the arithmetic element 208 may perform operations for each respective trial for each respective state variable of the row (e.g., one for the respective state variable and one for the currently "ON" variable), the arithmetic element 208 may perform an additional arithmetic cycle for row clustered Boltzmann Machines.

In these or other embodiments, the RPU 200 may operate in a strict serial mode in which only one trial may be performed at a time. In some embodiments, the operation of the RPU 200 while running a cross clustered Boltzmann Machine may be such that the RPU 200 operates in a strict serial mode. Additionally or alternatively, the parallelism that may be performed while running a regular Boltzmann Machine or a row clustered Boltzmann Machine may also be omitted such that the RPU 200 may operate in a strict serial mode while running these types of Boltzmann Machines as well.

The degree of parallelism used during the trials may help with solving the optimization problem more quickly. For instance, in some embodiments, the optimization problem may be determined as being solved in instances in which the energy of the system has been maximized or minimized. In such instances in which the energy has been maximized or minimized, there may not be any more accepted state changes. Further, as the problem approaches being solved the acceptance rate of state changes may decline. By performing parallel trials, the number of trials performed at a time may be increased to allow for reaching the solution faster.

However, the amount of parallelism used may also increase the use of processing resources. As such, in some instances (e.g., instances in which the acceptance rate is relatively high) it may be less efficient to have a high degree of parallelism. Therefore, in some embodiments, the degree of parallelism performed by the RPU 200 may be adjusted based on an acceptance rate of state changes of the state variables.

For example, the controller 284 may be communicatively coupled to the decision element 210 and may be configured to track which proposed changes to the individual variables may be accepted and which proposed changes may be rejected. In these or other embodiments, the controller 284 may be configured to determine the acceptance rate of the proposed changes.

In some embodiments, the controller 284 may be configured to adjust the degree of parallelism based on the determined acceptance rate. For example, the controller 284 may be configured to increase the degree of parallelism as the acceptance rate decreases. Additionally or alternatively, the controller 284 may be configured to decrease the degree of parallelism as the acceptance rate increases. For instance, in some embodiments, in response to an acceptance rate that is at or above a first threshold that corresponds to a relatively high acceptance rate, the controller 284 may direct the RPU 200 to operate in a serial mode. Additionally or alternatively, in response to an acceptance rate that is between the first threshold and a second threshold that is lower than the first threshold, the controller 284 may direct the RPU 200 to operate in a non-fully parallel sequential mode. In these or other embodiments, in response to an acceptance rate that is between the second threshold and a third threshold that is lower than the second threshold, the controller 284 may direct the RPU 200 to operate in a fully parallel sequential mode. Additionally or alternatively, in response to an acceptance rate that is between the third threshold and a fourth threshold that is lower than the third threshold, the controller 284 may direct the RPU 200 to operate in a fully parallel mode, if available as an option.

Additionally or alternatively, in some instances, the solving of the optimization problem may get stuck in a local maximum or a local minimum in which the acceptance rate may be zero or close to zero, but in which the overall energy of the system may not be at the actual minimum or maximum. In some embodiments, and as discussed in further detail below, the RPU 200 may be configured such that an offset may be applied to each of one or more of the local field values to help move the optimization process out of a local minimum or a local maximum. In some embodiments, the application of the offset may be based on the determined acceptance rate.

For example, in some embodiments, the controller 284 may be configured to apply an offset to the local fields being used in a trial in response to the acceptance rate being at or near zero. In some embodiments, the controller 284 may be configured to apply an initial offset to the local fields. For example, the initial offset may be provided to the arithmetic element 208 and the arithmetic element 208 may be directed to add or subtract the initial offset to one or more of the local field values of the local field matrix H that are used in subsequent trials.

In some embodiments, the value of the initial offset may be a number provided by a user or a default number provided to the controller 284. In these or other embodiments, the value of the initial offset may be selected based on the current local field values. For example, in some embodiments, the highest local field value included in the local field matrix H may be used as the initial offset. In these or other embodiments, the use of the highest local field value as the initial offset may be such that the highest local field value is subtracted from the local field values. Additionally or alternatively, the lowest local field value included in the local field matrix H may be used as the initial offset instead of the highest local field value, in some embodiments.

In these or other embodiments, the controller 284 may be configured to use the decision element 210 to determine the highest local field value. For example, the candidate reduction tree of the decision element 210 may be fed the local field values and may be directed to output the highest value. In some instances, the decision element 210 may perform the comparisons on a row-by-row basis such that the highest local field value of each row of the local field matrix $H$ may be obtained. In these or other embodiments, the highest value for each row may be saved and then the highest value from each row may be provided to the decision element 210 to determine the highest value of the overall local field matrix $H$.

Following the application of the initial offset, the controller 284 may then direct that one or more trials be run with the initial offset applied and may assess the acceptance rate after the running of the trials. In some embodiments, the controller 284 may direct that a respective trial be run with respect to each state variable before reassessing the acceptance rate. In some embodiments, in response to at least one proposed state change being accepted, the controller 284 may be configured to direct that the offset no longer be applied.

In these or other embodiments, in response to no proposed changes being accepted, the controller 284 may be configured to direct that a change be made to the initial offset. For example, the controller 284 may increment the initial offset by a particular amount. For example, in some embodiments the initial offset may be incremented by the highest local field value in some embodiments. In some embodiments, the controller 284 may be configured to iteratively increment the offset and perform trials until a change is accepted.

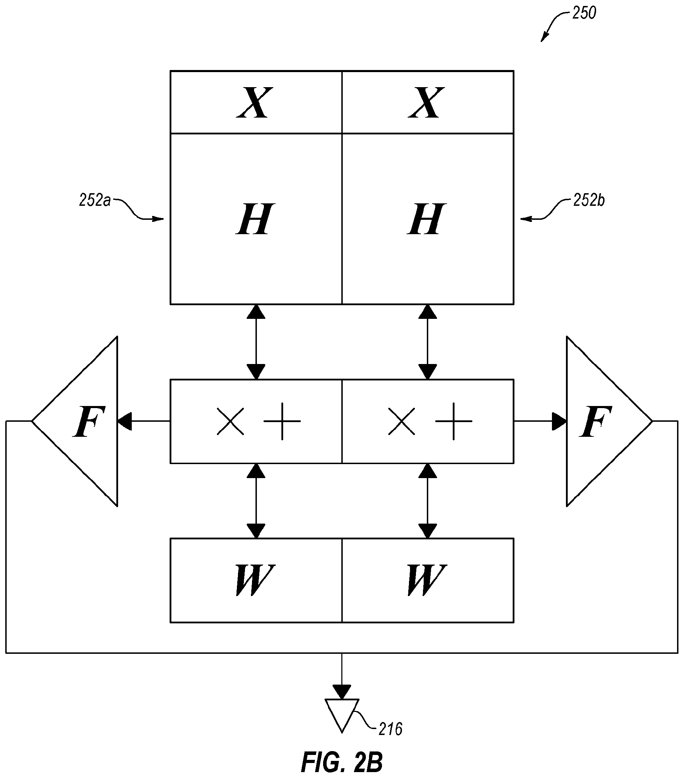

In some embodiments, two or more RPU's 200 may be merged to increase the amount of parallelism that may be performed such that more than *D* trials may be performed at a time. For example, FIG. 2B illustrates a merged RPU 250 that includes a first RPU 252a and a second RPU 252b, each configured to operate as a regular Boltzmann Machine. In FIG. 2B, the RPU's 252 may each be analogous to the RPU 200 of FIG. 2A. The merged RPU 250 may also include an additional decision element 216 that is configured to obtain the outputs of the respective decision elements of the first RPU 252a and the second RPU 252b (e.g., the selected accepted state change of a respective variable of the state matrix of the first RPU 252a and of the state matrix of the second RPU 252b). The decision element 216 may be configured to randomly select one of the obtained outputs as the variable state to change.

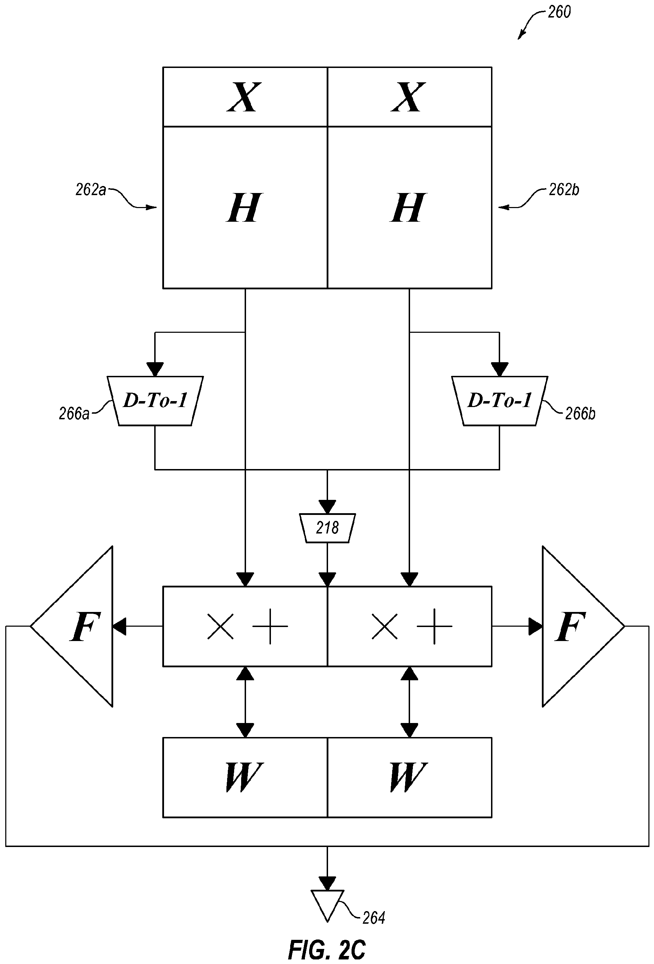

FIG. 2C illustrates another example of merged RPU's. In particular, FIG. 2C illustrates a merged RPU 260 that includes a first RPU 262a and a second RPU 262b, each configured to be able to operate as a row clustered Boltzmann Machine. In FIG. 2C, the RPU's 262 may each be analogous to the RPU 200 of FIG. 2A. The merged RPU 260 may also include an additional decision element 264 that may be analogous to the decision element 216 of FIG. 2B. Further, the first RPU 262a may include a *D-to-1* multiplexer 266a and the second RPU 262b may include a *D-to-1* multiplexer 266b. The *D-to-1* multiplexers 266 may be analogous to the *D-to-1* multiplexer 214 of FIG. 2A. Further, the merged RPU 260 may include a *2-to-1* multiplexer that may be configured to select one of the outputs of the *D-to-1* multiplexers 266. In addition, the merged RPU 260 may include a route that allows switching between the local fields that correspond to the "ON" state variables of the respective rows into the respective arithmetic elements of the respective RPU's 262.

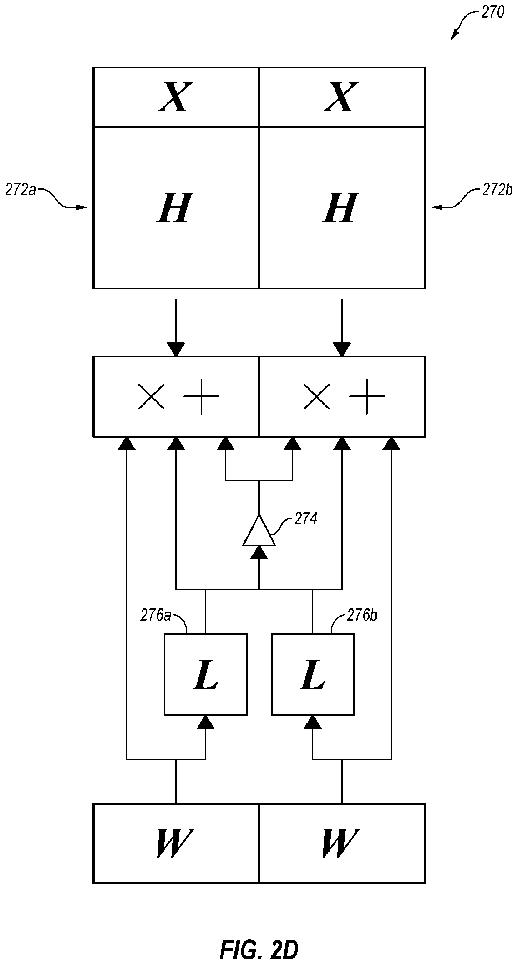

FIG. 2D illustrates another example of merged RPU's. In particular, FIG. 2D illustrates a merged RPU 270 that includes a first RPU 272a and a second RPU 272b, each configured to be able to operate as a cross clustered Boltzmann Machine. In FIG. 2D, the RPU's 272 may each be analogous to the RPU 200 of FIG. 2A. The merged RPU 270 may also include an additional decision element 274 that may be analogous to the decision element 216 of FIG. 2B. Further, the first RPU 272a may include a logic block 276a and the second RPU 272b may include a logic block 276b. The logic blocks 276 may be analogous to a combination of the decision element 210 and the logic block 212 of FIG. 2A.

Note that each of the merged RPU's illustrated in FIGS. 2B-2D may be implemented using a same set of hardware components. For example, a merged RPU may have a hardware configuration similar or analogous to that of the merged RPU 270. In these or other embodiments, when implementing a particular type of Boltzmann Machine, the elements that may not be applicable for the particular type of Boltzmann Machine may be present but not in use.

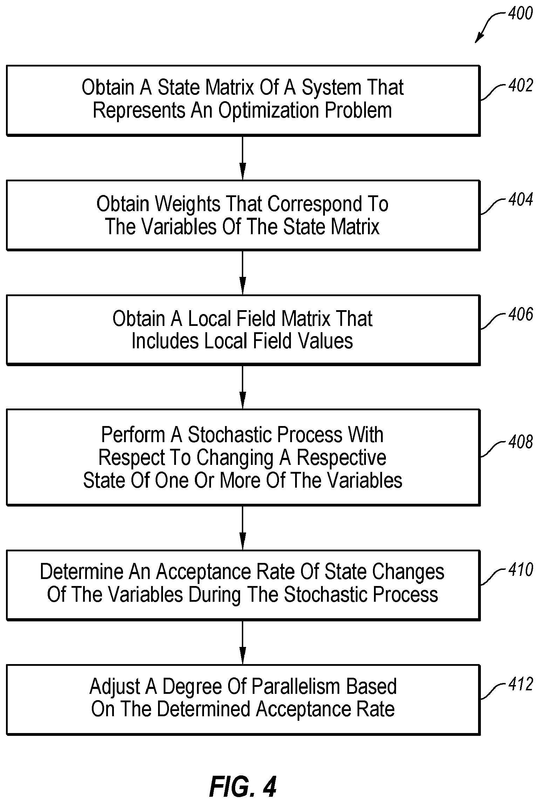

In addition to multiple RPU's 200 being able to be merged to perform additional parallelism for a particular replica of a system, multiple RPU's 200 may be configured to operate to perform a replica-exchange process. In these or other embodiments, one or more of the RPU's 200 may be configured to run a different replica in the replica exchange process. Additionally or alternatively, two or more different RPU's 200 running different replicas may be configured to run different types of the system. For example, one RPU may run a regular Boltzmann Machine, another may run a row clustered Boltzmann Machine, and/or another may run a cross-clustered Boltzmann Machine. An example of RPU's 200 being used to perform a replica exchange process is given with respect to FIG. 4 below.

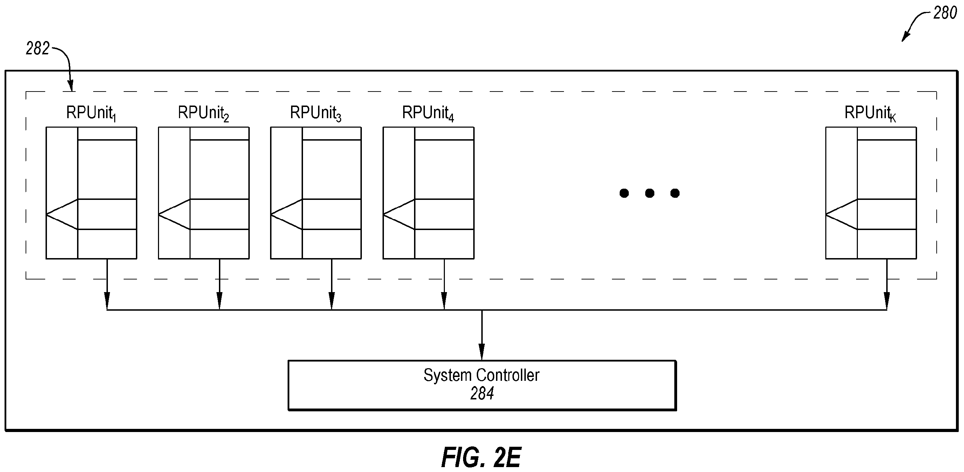

By way of example, FIG. 2E illustrates an example system 280 that may be configured to perform a replica exchange process using multiple RPU's 200. For instance, the system 280 may include a group 282 of *RPUnit's* in which each *RPUnit* may be an RPU 200 or a merged RPU such as described above. The system 280 may also include the controller 284 ("controller 284"), which may be configured to direct the replica exchange process.

The controller 284 may be configured to obtain the different states of the replicas run by the different *RPUnit's* and may accordingly adjust the replica exchange process according to any suitable technique. Further, the controller 284 may be configured to direct the different *RPUnit's* to perform any suitable type of replica exchange process such as parallel tempering, simulated annealing, etc. Additionally or alternatively, the controller 284 may be configured to direct the loading of data into the different blocks of the *RPUnit's* from one or more applicable external sources. In these or other embodiments, the controller 284 may be configured to direct as to the type of system the different *RPUnit's* may implement. For example, the controller 284 may direct the operations of the different *RPUnit's* to run a regular Boltzmann Machine, a row clustered Boltzmann Machine, and/or a cross-clustered Boltzmann Machine.

Modifications, additions, or omissions may be made to FIGS. 2A-2E without departing from the scope of the present disclosure. For example, the specific number, size, layout, etc. of elements may vary. Further, the various components illustrated and described may be included on a same chip in some embodiments. Additionally or alternatively, one or more components may be on a different chip than one or more other components.

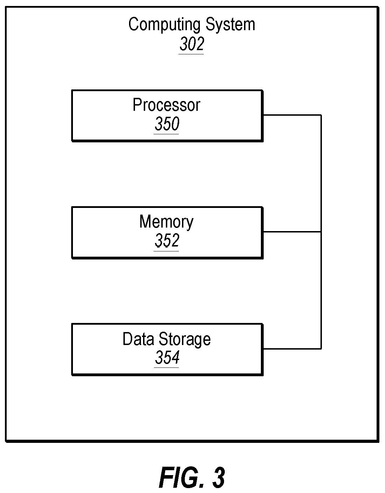

FIG. 3 illustrates a block diagram of an example computing system 302 configured to perform one or more operations described herein, according to at least one embodiment of the present disclosure. For example, the computing system 302 may be configured to implement or direct one or more operations associated with the energy engine 102 and/or the LFM 108 of FIG. 1A in some embodiments. Additionally or alternatively, the controller 284 of FIG. 2A may include the computing system 302. In some embodiments, the computing system 302 may be included in or form part of an annealing system. The computing system 302 may include a processor 350, a memory 352, and a data storage 354. The processor 350, the memory 352, and the data storage 354 may be communicatively coupled.

In general, the processor 350 may include any suitable computer, computing entity, or processing device including various computer hardware or software modules and may be configured to execute instructions stored on any applicable computer-readable storage media. For example, the processor 350 may include a microprocessor, a microcontroller, a digital signal processor (DSP), an application-specific integrated circuit (ASIC), a Field-Programmable Gate Array (FPGA), a graphics processing unit (GPU), a central processing unit (CPU), or any other digital or analog circuitry configured to interpret and/or to execute program instructions and/or to process data. Although illustrated as a single processor in FIG. 3, the processor 350 may include any number of processors configured to, individually or collectively, perform or direct performance of any number of operations described in the present disclosure. Additionally, one or more of the processors may be present on one or more different electronic devices, such as different servers.

In some embodiments, the processor 350 may be configured to interpret and/or execute program instructions and/or process data stored in the memory 352, the data storage 354, or the memory 352 and the data storage 354. In some embodiments, the processor 350 may fetch program instructions from the data storage 354 and load the program instructions in the memory 352. After the program instructions are loaded into memory 352, the processor 350 may execute the program instructions. For example, in some embodiments, the energy engine 102, the LFM engine 108 of FIG. 1A, and/or the controller 284 of FIG. 2A may be software modules that are program instructions that may be loaded into the memory 352 and executed by the processor 350.

The memory 352 and the data storage 354 may include computer-readable storage media configured to have computer-executable instructions or data structures stored thereon. Such computer-readable storage media may include any available non-transitory media that may be accessed by a computer, such as the processor 350. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM)or other optical disk storage, magnetic disk storage or other magnetic storage devices, flash memory devices (e.g., solid state memory devices), or any other non-transitory storage medium which may be used to store particular program code in the form of computer-executable instructions or data structures and which may be accessed by a computer. In these and other embodiments, the term "non-transitory" as explained in the present disclosure should be construed to exclude only those types of transitory media that were found to fall outside the scope of patentable subject matter in the Federal Circuit decision *of In re Nuijten,* 500 F.3d 1346 (Fed. Cir. 2007).

Combinations of the above may also be included within the scope of computer-readable storage media. Computer-executable instructions may include, for example, instructions and data configured to cause the processor 350 to perform a certain operation or group of operations.

Modifications, additions, or omissions may be made to the computing system 302 without departing from the scope of the present disclosure. For example, in some embodiments, the computing system 302 may include any number of other components that may not be explicitly illustrated or described. Additionally or alternatively, the computing system 302 may include fewer elements or be configured differently. For example, the memory 352 and/or the data storage 354 may be omitted or may be part of the same computer-readable storage media. In addition, reference to hardware or operations performed by hardware in the present disclosure may refer to any applicable operation, configuration, or combination of one or more of the elements of the computing system 302.

FIG. 4 illustrates a flowchart of an example method 400 of performing trials during the solving of an optimization problem, according to at least one embodiment described in the present disclosure. The operations of the method 400 may be performed by any suitable system, apparatus, or device. For example, the energy engine 102 and/or the LFM engine 108 of FIG. 1A, the RPU's and/or the controllers of FIGS. 2A-2E, or the computing system 302 of FIG. 3 may perform one or more of the operations associated with the method 400. Although illustrated with discrete blocks, the steps and operations associated with one or more of the blocks of the method 400 may be divided into additional blocks, combined into fewer blocks, or eliminated, depending on the particular implementation.

At block 402, a state matrix of a system that represents an optimization problem may be obtained. The state matrix may include variables that may each represent a characteristic related to the optimization problem. For example, the state matrix $X$ described above with respect to FIG. 2A may be obtained. In some embodiments obtaining the state matrix may include loading the state matrix into a memory, such as loading the state matrix into a state block of an RPU. Additionally or alternatively, obtaining the state matrix may include obtaining one or more values of the state variables from the state block and loading them into an arithmetic element, such as the arithmetic element 208 of FIG. 2A.

At block 404, weights that correspond to the variables of the state matrix may be obtained. Each respective weight may relate to one or more relationships between a respective variable and one or more other variables of the state matrix. In some embodiments, the weights may be obtained from a weight matrix, such as the weight matrix $W$ described above with respect to FIG. 2A. In these or other embodiments, the weights may be determined based on one or more other matrices, such as described in U.S. Patent Application No. 16/849,887. In these or other embodiments, obtaining the weights may include loading the weight matrix into a weight block of an RPU. Additionally or alternatively, obtaining the weights may include obtaining the weights from the weight block and/or external memory and loading them into an arithmetic element, such as the arithmetic element 208 of FIG. 2A.

At block 406, a local field matrix that corresponds to the state matrix may be obtained. The local field matrix may include local field values that indicate interactions between the variables of the state matrix as influenced by the respective weights of the respective variables. For example, the local field matrix H described above with respect to FIG. 2A may be obtained. In some embodiments obtaining the local field matrix may include loading the local field matrix into a memory, such as loading the local field matrix into a local field block of an RPU. Additionally or alternatively, obtaining the local field matrix may include obtaining one or more of the local field values from the local field block and loading them into an arithmetic element, such as the arithmetic element 208 of FIG. 2A.

At block 408, a stochastic process may be performed based on the weights and the local field values. The stochastic process may be performed with respect to changing a respective state of one or more of the variables and may include performing trials with respect to one or more of the variables, in which a respective trial determines whether to change a respective state of a respective variable. For example, the stochastic process may be performed as described above with respect to FIG. 2A in some embodiments.

At block 410, an acceptance rate of state changes of the variables may be determined. At block 412, a degree of parallelism with respect to performing the trials may be adjusted. In some embodiments, the degree of parallelism may be adjusted based on the acceptance rate, such as described above with respect to FIG. 2A. In these or other embodiments, an offset may be applied based on the acceptance rate, such as also described above with respect to FIG. 2A.

Modifications, additions, or omissions may be made to the method 400 without departing from the scope of the present disclosure. For example, in some instances, some of the operations may be performed iteratively. For instance, in some embodiments, following block 412, the operations may return to block 408 and the operations 408, 410, and 412 may be repeated. the operations of method 400 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the essence of the disclosed embodiments.

As used herein, the terms "module" or "component" may refer to specific hardware implementations configured to perform the operations of the module or component and/or software objects or software routines that may be stored on and/or executed by general-purpose hardware (e.g., computer-readable media, processing devices, etc.) of the computing system. In some embodiments, the different components, modules, engines, and services described herein may be implemented as objects or processes that execute on the computing system (e.g., as separate threads). While some of the system and methods described herein are generally described as being implemented in software (stored on and/or executed by general purpose hardware), specific hardware implementations or a combination of software and specific hardware implementations are also possible and contemplated. In this description, a "computing entity" may be any computing system as previously defined herein, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc.", or "at least one of A, B, or C, etc." or "one or more of A, B, or C, etc." is used, in general such a construction is intended to include A alone, B alone, C alone, A and B together, A and C together, B and C together, or A, B, and C together, etc. Additionally, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B" even if the term "and/or" is used elsewhere.

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method comprising:

    obtaining a state matrix of a system that represents an optimization problem, the state matrix including variables that each represent a characteristic related to the optimization problem;
    obtaining weights that correspond to the variables, each respective weight relating to one or more relationships between a respective variable and one or more other variables of the state matrix;
    obtaining a local field matrix that includes local field values, the local field values indicating interactions between the variables as influenced by the respective weights of the respective variables;
    performing, based on the weights and the local field values, a stochastic process with respect to changing a respective state of one or more of the variables, the stochastic process including performing trials with respect to one or more of the variables, in which a respective trial determines whether to change a respective state of a respective variable;
    determining an acceptance rate of state changes of the variables during the stochastic process; and
    adjusting a degree of parallelism with respect to performing the trials based on the determined acceptance rate.

2. The method of claim 1, wherein adjusting the degree of parallelism includes increasing the degree of parallelism as the acceptance rate decreases.

3. The method of claim 1, wherein adjusting the degree of parallelism includes decreasing the degree of parallelism as the acceptance rate increases.

4. The method of claim 1, further comprising adjusting, based on the determined acceptance rate, an offset applied to one or more of local field values of the local field matrix while performing the trials.

5. The method of claim 4, wherein adjusting the offset includes increasing the offset in response to the acceptance rate being zero.

6. The method of claim 4, wherein adjusting the offset includes removing the offset in response to at least one change being accepted.

7. The method of claim 4, wherein adjusting the offset includes incrementally changing a value of the offset.

8. The method of claim 4, further comprising:

    identifying a highest local field value of the local field matrix; and
    using the highest local field value as the offset.

9. A system comprising:

    memory storing:

a state matrix of a system that represents an optimization problem, the state matrix including variables that each represent a characteristic related to the optimization problem;

weights that correspond to the variables, each respective weight relating to one or more relationships between a respective variable and one or more other variables of the state matrix; and

a local field matrix that includes local field values, the local field values indicating interactions between the variables as influenced by the respective weights of the respective variables; and

hardware configured to perform operations, the operations comprising:

performing, based on the weights and the local field values, a stochastic process with respect to changing a respective state of one or more of the variables, the stochastic process including performing trials with respect to one or more of the variables, in which a respective trial determines whether to change a respective state of a respective variable;

determining an acceptance rate of state changes of the variables during the stochastic process; and

adjusting a degree of parallelism with respect to performing the trials based on the determined acceptance rate.

10. The system of claim 9, wherein adjusting the degree of parallelism includes increasing the degree of parallelism as the acceptance rate decreases.

11. The system of claim 9, wherein adjusting the degree of parallelism includes decreasing the degree of parallelism as the acceptance rate increases.

12. The system of claim 9, the operations further comprising adjusting, based on the determined acceptance rate, an offset applied to one or more of local field values of the local field matrix while performing the trials.

13. The system of claim 12, wherein adjusting the offset includes increasing the offset in response to the acceptance rate being zero.

14. The system of claim 12, wherein adjusting the offset includes removing the offset in response to at least one change being accepted.

15. The system of claim 12, wherein adjusting the offset includes incrementally changing a value of the offset.

16. The system of claim 12, the operations further comprising:

identifying a highest local field value of the local field matrix; and
using the highest local field value as the offset.

17. A system comprising:

a plurality of replica exchange units, each respective replica exchange unit of the plurality of replica exchange units including:

memory storing:

a state matrix of a system that represents an optimization problem, the state matrix including variables that each represent a characteristic related to the optimization problem;

weights that correspond to the variables, each respective weight relating to one or more relationships between a respective variable and one or more other variables of the state matrix; and

a local field matrix that includes local field values, the local field values indicating interactions between the variables as influenced by the respective weights of the respective variables; and

hardware configured to perform, based on the weights and the local field values, a stochastic process with respect to changing a respective state of one or more of the variables, the stochastic process including performing trials with respect to one or more of the variables, in which a respective trial determines whether to change a respective state of a respective variable; and

a controller configured to perform operations, the operations comprising:

determining an acceptance rate of state changes of the variables during the stochastic process; and adjusting a degree of parallelism with respect to performing the trials based on the determined acceptance rate.

18. The system of claim 17, wherein the operations performed by the controller further include directing performance of a replica exchange process by the plurality of replica processing units.

19. The system of claim 17, wherein two or more of the replica exchange units operate as a merged replica exchange unit with respect to a same replica of the state matrix.

20. The system of claim 17, wherein the operations performed by the controller further include adjusting, based on the determined acceptance rate, an offset applied to one or more of local field values while performing the trials.

**FIG. 1**

FIG. 2A

FIG. 2B

FIG. 2C

**FIG. 2D**

*FIG. 2E*

Computing System
*302*

Processor
*350*

Memory
*352*

Data Storage
*354*

FIG. 3

400

| Obtain A State Matrix Of A System That Represents An Optimization Problem | 402 |

| Obtain Weights That Correspond To The Variables Of The State Matrix | 404 |

| Obtain A Local Field Matrix That Includes Local Field Values | 406 |

| Perform A Stochastic Process With Respect To Changing A Respective State Of One Or More Of The Variables | 408 |

| Determine An Acceptance Rate Of State Changes Of The Variables During The Stochastic Process | 410 |

| Adjust A Degree Of Parallelism Based On The Determined Acceptance Rate | 412 |

*FIG. 4*

Europäisches
Patentamt

European
Patent Office

Office européen
des brevets

## EUROPEAN SEARCH REPORT

**Application Number**

**EP 22 17 7793**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUZHEN HUANG ET AL: "FlexPS", PROCEEDINGS OF THE VLDB ENDOWMENT; [ACM DIGITAL LIBRARY], ASSOC. OF COMPUTING MACHINERY, NEW YORK, NY, vol. 11, no. 5, 1 January 2018 (2018-01-01), pages 566-579, XP058384831, ISSN: 2150-8097, DOI: 10.1145/3177732.3177734 * the whole document * | 1-20 | INV. G06N3/04 G06N7/00 G06N10/60 |
| A | MALIHEH ARAMON ET AL: "Physics-Inspired Optimization for Quadratic Unconstrained Problems Using a Digital Annealer", ARXIV.ORG, CORNELL UNIVERSITY LIBRARY, 201 OLIN LIBRARY CORNELL UNIVERSITY ITHACA, NY 14853, 22 June 2018 (2018-06-22), XP081200633, DOI: 10.3389/FPHY.2019.00048 * the whole document * | 1,9,17 | |

TECHNICAL FIELDS
SEARCHED      (IPC)

G06N

The present search report has been drawn up for all claims

| Place of search | Date of completion of the search | Examiner |
|---|---|---|
| The Hague | 1 November 2022 | Baldan, Marco |

EPO FORM 1503 03.82 (P04C01)

**EP 4 105 836 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 84988720

- US 849887